# EUROPEAN PATENT APPLICATION

(11) **EP 4 656 832 A1**
(43) Date of publication of application: **03.12.2025**
(21) Application number: 24178922.1
(22) Date of filing: 29.05.2024
(51) Int. Cl.: E05F 15/643, F16D 55/00, H02K 7/102

(54) **DRIVE DEVICE FOR A SLIDING DOOR**

(71) Applicant: Edscha Engineering GmbH, 42855 Remscheid (DE)
(72) Inventor: Fernández, Alberto, 39611 c/o Guarnizo, Polígono Industrial de Guarnizo 44 a 47 (ES); Moreno, Manuel, 39611 c/o Guarnizo, Polígono Industrial de Guarnizo 44 a 47 (ES); Ventura, Carlos, 39611 c/o Guarnizo, Polígono Industrial de Guarnizo 44 a 47 (ES); Sanchez, Miguel, 39611 c/o Guarnizo, Polígono Industrial de Guarnizo 44 a 47 (ES); Lopez, Luis, 39611 c/o Guarnizo, Polígono Industrial de Guarnizo 44 a 47 (ES)
(74) Representative: IPrime Bonnekamp Sparing Patentanwaltsgesellschaft mbH

(57) **Abstract**

The invention relates to a drive device for driving a sliding door comprising a housing (2), a drive unit (5) with an output shaft (6) rotatable about a drive axis (D1), a winding drum (9) for a traction means (70), wherein the winding drum (9) is coupled to the output shaft (6) of the drive unit (5), wherein the winding drum (9) is rotatable about a first axis of rotation (R1), and a tensioning arrangement (10) for tensioning the traction means (70) against the winding drum (9), wherein the tensioning arrangement (10) comprises at least a first pretensioning means (11) and at least a first guide pulley (12) rotatable about a second axis of rotation (R2). A drive device that is safe to use, reliable and has a compact size is archieved by the guide pulley (12) being displaceable in a first direction (P) and is being locked in a second direction (O) opposite to the first direction (P)

## Description

The invention relates to a drive device for driving a sliding door, comprising a housing, a drive unit with an output shaft rotatable about a drive axis, a winding drum for a traction means, wherein the winding drum is coupled to the output shaft of the drive unit, wherein the winding drum is rotatable about a first axis of rotation and a tensioning arrangement for tensioning the traction means against the winding drum, wherein the tensioning arrangement comprises at least a first pretensioning means and at least a first guide pulley rotatable about a second axis of rotation. Further the invention relates to a braking device for a drive device comprising a first brake part, a second brake part coupled to an output shaft of a drive unit of the drive device, wherein the second brake part is rotatable together with the output shaft about a drive axis, and a spring pretensioning the first brake part towards the second brake part.

From practice drive devices for sliding doors are known which comprise a housing and a drive unit within the housing for driving a winding drum. The winding drum carries a traction means, whereby the traction means is guided through the housing between two openings provided in the housing. Furthermore, the drive devices generally comprise a tensioning device for the traction means, which is intended to ensure that the traction means is guided around the winding drum with sufficient tension to prevent the tensioning means from falling off the winding drum during operation. Furthermore, it is crucial for tracking the current door position that the traction means remains guided on the winding drum without slipping. This however is often not the case during a manual operation of the sliding door, as the door may be accelerated too fast.

US 7,854,093 B2 shows a drive device for a sliding door of a vehicle, comprising a housing, a drive unit with an output shaft rotatable about a drive axis and a winding drum for a cable connected to the sliding door and the vehicle body respectively. The drive device further comprises a tensioning device for tensioning the cable, wherein the tensioning device comprises a spring and a guide pulley, wherein the guide pulley is inserted in a pulley holder and the pulley holder is tensioned by the spring in a first direction for tensioning the cable. Disadvantageously, the pulley holder together with the guide pulley can also be moved in a second direction opposite to the first direction, so that if the user moves the vehicle door quickly by hand, there is a risk that the guide pulley or the pulley holder will start to vibrate, which may encourage the cable to slip due to the at least temporarily reduced tension.

It is the object of the invention to provide a drive device that is safe to use, reliable and has a compact size. Furthermore, it is the object of the invention to provide a braking device for a drive device which is reliable and compact in size.

The above object is achieved by a drive device according to claim 1 and a braking device for a drive device according to claim 9.

According to a first aspect of the invention a drive device for driving a sliding door, is created wherein the drive device comprises a housing, a drive unit with an output shaft rotatable about a drive axis, a winding drum for a traction means, wherein the winding drum is coupled to the output shaft of the drive unit, wherein the winding drum is rotatable about a first axis of rotation and a tensioning arrangement for tensioning the traction means against the winding drum, wherein the tensioning arrangement comprises at least a first pretensioning means and at least a first guide pulley rotatable about a second axis of rotation. The drive device according to the invention is characterized in that the guide pulley is displaceable in a first direction and is locked in a second direction opposite to the first direction. Advantageously, the tension provided by the pretensioning device for the tensioning means can be increased by displacing the guide pulley in the first direction. This is necessary over time because the pretensioning means, which is preferably designed as a cable, becomes longer over time due to the tensile load and the tension would therefore decrease accordingly in relation to the winding drum. The locking of a displacement of the guide pulley in the opposite second direction further advantageously prevents the guide pulley from getting into an uncontrolled vibration and, in the worst case, the pulling means getting out of engagement with the winding drum or the guide pulley, particularly in the event of rapid load changes, such as can occur during manual actuation by the user during servo operation, in which the manual displacement of the sliding door is merely supported by the drive device.

In an advantageous further development of the drive device, it is provided that the guide pulley can be continuously displaced in the first direction and is locked in the opposite second direction at least in defined steps. Advantageously, a predefined preload value for the traction means can be provided at any time, whereby sufficient damping of unwanted vibrations due to a displacement in the opposite second direction is achieved, which is locked at least in defined steps. In a preferred embodiment the guide pulley may be displaced in the first direction in defined steps.

In a particularly preferred embodiment of the drive device, the tensioning device comprises a first support element in which the first guide pulley is rotatably supported, the support element being displaceable in the first direction and locked in the second direction. Advantageously, the support element provides a mechanically more stable rotatable mounting of the first guide pulley and, in addition, greater external forces can be better absorbed by the support element.

Preferably the first support element comprises a first sidewall and a second sidewall between which the first guide pulley is arranged, wherein the first sidewall is connected to the second sidewall via a connecting web. Expediently the first pretensioning means is connected at a first end to the connecting web and at a second end to the housing. Advantageously, the support element is thus pretensioned in the first direction in which the tension acting on the traction means is increased.

Expediently the first sidewall and the second sidewall each have a bearing hole, wherein a bearing bolt passes through each bearing hole. The first guide pulley is mounted on the bearing bolt wherein the first guide pulley is displaceable along the second axis of rotation between the first sidewall and the second sidewall. Advantageously, the first guide pulley can provide secure guidance of the traction means over a wider axial area along the second axis of rotation.

The bearing hole is particularly preferably elongated along the first direction in which the support element is displaceable. Advantageously, this makes it possible to allow bending of the sidewalls in the direction of the longitudinal extension of the bearing pin without the bearing pin hindering this bending.

In an advantageous configuration of the drive unit the support element comprises a first coupling element coupled to a counter-coupling section, wherein the counter-coupling section is fixed relative to the housing. The first coupling element and the counter-coupling section thus provide a coupling between the support element and the housing, wherein the coupling is configured to allow a movement of the support element in the first direction and is blocking a movement of the support element in the opposing second direction.

In a preferred embodiment of the drive device the first coupling element is designed as a pawl tooth and the counter-coupling section is designed as a toothing. In an expedient further development, it is provided that the pawl tooth has a flat top surface and a slanted bottom surface, and the toothing has teeth with a flat bottom surface and a slanted top surface. Advantageously, the pawl tooth can slide with its slanted bottom surface on the slanted top surface of the teeth of the toothing, whereby the pawl tooth is displaced due to the flexibility of the sidewalls of the support element. Accordingly, the support element can be displaced downwards in the first direction under the pretension of the pretensioning means. In contrast, the flat top surface of the pawl tooth and the flat bottom surface of the teeth of the toothing are positively engaged with each other in the opposite second direction, so that a displacement of the support element in the second direction is blocked.

Expediently the first guide pulley has a base body made of a first material with a bearing hole passing through the base body along an axis of rotation and a radially circumferential bearing surface for the traction means, wherein the bearing surface consists at least partially of a second material. Advantageously, the second material is more elastic than the first material. The second material is advantageously able to absorb additional tractive forces acting on the traction means. This is particularly advantageous because the guide pulley cannot be displaced in the second direction and therefore no evasive movement of the guide pulley is possible when the tension of the traction means is increased. The increase in tension of the traction means occurs in particular at low temperatures, at which the traction means contracts and is reduced in length.

According to another aspect of the invention a guide pulley for a drive device is created, wherein the guide pulley comprises a base body made of a first material with a bearing hole which passes through the base body along an axis of rotation and a radially circumferential running surface, characterized in that the running surface consists at least partially of a second material. The second material is more elastic than the first material and is preferably a rubber-elastic material, in particular an elastomer.

The first material is preferably an injection-moldable plastic. The second material is preferably a rubber-elastic material, in particular an elastomer. This can safely absorb the tensile forces that occur in the area of the running surface of the guide pulley when the traction means is shortened, deforming the second material. The second material is particularly preferably rubber.

In a preferred embodiment the base body has a radially circumferential groove in the region of the running surface, wherein an annular running body, which is made of the second material, is received in the groove. Advantageously, the annular running element can be easily removed from the groove and replaced.

According to another aspect of the invention a braking device for a drive device, in particular a drive device as described above, is created, comprising a first brake part, a second brake part coupled to an output shaft of a drive unit of the drive device, wherein the second brake part is rotatable together with the output shaft about a first drive axis, and a spring pretensioning the first brake part towards the second brake part. The braking device according to the invention is characterized in that a counteracting element designed to displace the first brake part against the pretensioning of the spring away from the second brake part is arranged at the first brake part. Advantageously, the braking device is particularly compact, as the countertraction means is arranged directly at the first brake part.

It is particularly preferable for the first brake part to have a receptacle in which the countertraction means is arranged at least in parts. Advantageously, the countertraction means essentially does not take up any additional installation space, so that the braking device is designed to be very space-saving. Preferably the counteracting element is designed as a wedge part, wherein the wedge part has an inclined first side surface which is in engagement with an inclined first side surface of the receptacle within the first brake part. Alternatively, the counteracting element is designed as a square nut threadingly engaged with a brake drive shaft of a brake motor.

Advantageously the braking device comprises a brake motor having a brake drive shaft rotatable about a brake drive axis wherein the counteracting element is displaced along the brake drive axis by rotation of the brake drive shaft about the brake drive axis. Preferably the counteracting element is displaced in a direction traverse to the direction of pretensioning of the spring thus displacing the first brake element along the first drive axis. Thus the counteracting element is preferably displaced transverse to the first brake element. Alternatively, the counteracting element and the first brake element are displaced coaxially along the brake drive axis or the drive axis.

Further advantageously a second side surface of the wedge part opposite the inclined first side surface is flat and is at least indirectly frictionally coupled to a second flat side surface opposite the inclined first side surface of the receptacle. In a preferred embodiment a plate is arranged between the second flat side surface of the wedge part and the second flat side surface of the receptacle, wherein the surface of the plate facing the second flat side surface of the wedge part has a low coefficient of friction. Expediently the brake drive axis is transverse, in particular perpendicular to the drive axle. This reduces the axial expansion of the braking device, making it easier to insert into a corresponding housing of a drive device.

Particularly preferred the first brake part is at least partially received in a guide housing so as to be displaceable along the first drive axis wherein the guide housing is stationary relative to the second brake part. The guide housing conveniently has a longitudinally extended receptacle into which a longitudinally extended guide section of the first brake part is inserted. It is particularly preferable for the first brake part to be non-rotatable relative to the guide housing, but axially displaceable therein. Conveniently, the guide section of the first brake part has at least two opposing flat outer sides and the guide housing has corresponding flat inner sides, with the outer sides being arranged parallel to the inner sides. Particularly preferably, the distance between the outer sides of the guide section corresponds to the distance between the inner sides of the guide housing, so that a rotationally fixed axial guidance of the first brake part is realized.

Further preferably, the guide housing has a first opening on its front side, which is provided for receiving the guide section of the first brake part. Furthermore, the opposing side surfaces of the guide housing, which run parallel to the first drive axis of the output shaft, each have longitudinally extending recesses, whereby the recesses can be penetrated by the brake drive shaft or by the wedge part.

The first brake part advantageously has a brake element with a first braking surface, wherein the brake element is arranged at a first end of the first brake part facing the second brake element. Conveniently, the second brake part has a second braking surface which faces the first braking surface of the first brake part.

Further advantages, embodiments and features of the invention follow from the description below of a preferred embodiment and from the dependent claims.

The invention is explained in more detail with reference to the attached figures of preferred embodiments of the invention.
- Fig. 1: shows a preferred embodiment of a drive device 1 according to the invention in a perspective sideview.
- Fig. 2: shows a cross-section through the tensioning arrangement 10 of the drive device 1 of Fig. 1.
- Fig. 3: shows a cross section of the first guide pulley 12 shown in Fig. 2.
- Fig. 4: shows a sectional view along the drive axis of the drive unit 5 from a bird's eye view.
- Fig. 5: shows an exploded view of the braking device 22.

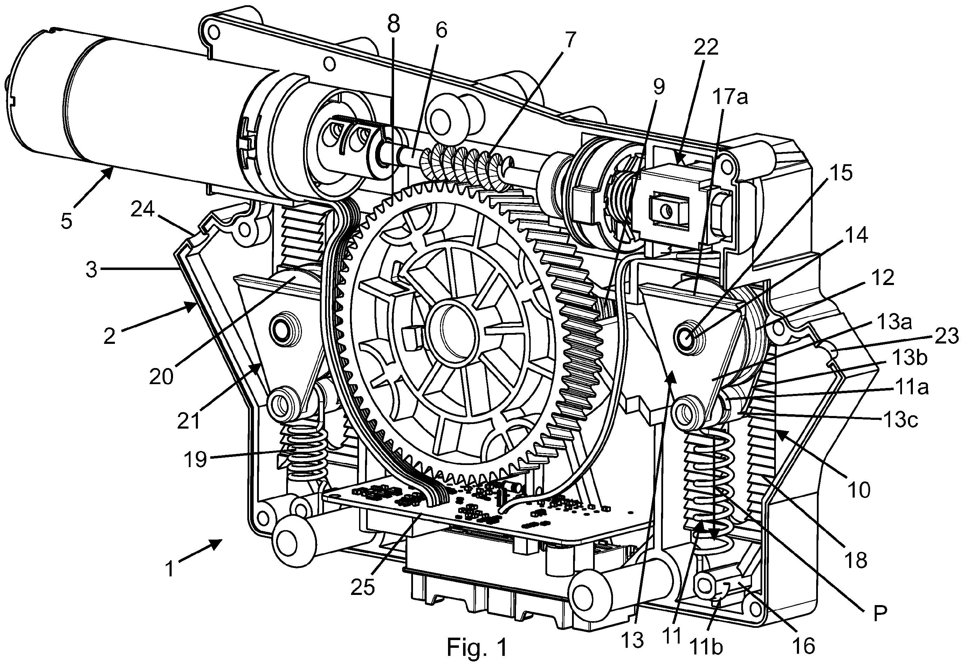

Fig. 1 shows a preferred embodiment of a drive device 1 according to the invention in a perspective sideview. The drive device 1 comprises a housing 2, wherein the housing 2 comprises a shown first housing part 3 and a second housing part not shown. The first housing part 3 and the second housing part are screwed together so that the housing 2 can be easily opened to carry out any maintenance work. The housing parts 3, 4 of the housing 2 are injection-molded plastic parts.

A drive unit 5 is fixed to the housing 2, wherein the drive unit 5 is designed as an electric motor having a driven output shaft 6 rotatable about a first drive axis. The drive unit 5 is only partially inserted into the housing 2, but the output shaft 6 is completely arranged in the housing 2. The output shaft 6 is designed as a worm shaft wherein the drive unit 5 has integrated hall sensors for detecting the current angular position of the output shaft 6 thus making it possible to detect the current position of the vehicle sliding door.

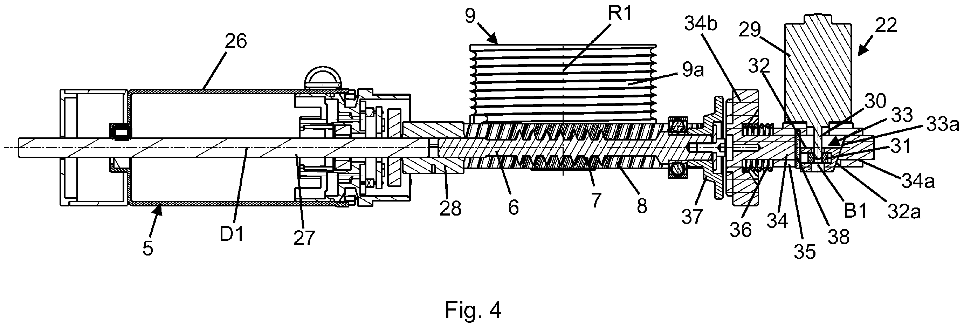

The output shaft 6 has a screw thread 7 threadingly engaged with a worm wheel 8, wherein the worm wheel 8 has an integrally formed winding drum 9 shown in Fig. 4. The worm wheel 8 and the winding drum 9 are rotatable about a first axis of rotation. A traction means (not shown) can be placed around the winding drum 9, whereby the traction means is preferably designed as a traction cable and is connected at one end to the vehicle body and at the other end to the sliding door. In this way, the traction means can be pulled in the opening and closing direction of the sliding door by the winding drum 9 driven in rotation by the drive unit 5, so that a driven opening and closing movement of the sliding door is possible.

A tensioning arrangement 10 for tensioning the traction means is arranged around the worm wheel 8 and the winding drum 9, thus avoiding the risk of the traction means losing its grip on the winding drum 9 or even falling off the winding drum 9 completely. The tensioning arrangement 10 comprises a first pretensioning means 11 designed as a tension spring, a first guide pulley 12 and a first support element 13 in which the first guide pulley 12 is mounted rotatably about a second axis of rotation. The pretensioning means 11 is coupled to the first support element 13 to pretension the first support element 13 and the first guide pulley 12 in a first direction P relative to the housing 2. The first direction P is the direction in which the displacement of the guide pulley 12 leads to a higher pretension of the traction means. The pretensioning means 11 thus provides a predetermined value of tension for the traction means and can compensate for a negative deviation from a predetermined tension value of the tensioning means.

The first support element 13 has a first sidewall 13a and a second sidewall 13b between which the first guide pulley 12 is rotatably arranged. The sidewalls 13a, 13b each have an elongated hole 14 designed to receive a bearing bolt 15, wherein the first guide pulley 12 is rotatably mounted on the bearing bolt 15. The sidewalls 13a, 13b of the support element 13 have an essentially triangular shape, with the sidewalls 13a, 13b being connected to each other at a lower end facing the pretensioning means 11 via a connecting web 13c, wherein a first end 11a of the pretensioning means 11 is coupled to the web 13c and a second end 11b of the pretensioning means 11 opposite the first end 11a is coupled to a projection 16 provided on the housing 2. The projection 16 is configured as a hollow cylinder.

The sidewalls13a, 13b each have a pawl tooth 17a on an upper side opposite from the lower connecting web 13c, wherein each pawl tooth 17a engages with a toothing 18 provided on the inside of the housing 2. The toothing 18 is designed in such a way that the support element 13 is displaceable in the first direction of pretension provided by the pretensioning means 11 but is prevented from moving in second direction opposite the direction of pretension as explained further below.

The tensioning arrangement 10 further comprises a second pretensioning means 19 designed as a tension spring, a second guide pulley 20 and a second support element 21 in which the second guide pulley 20 is mounted rotatably about a third axis of rotation. The second pretensioning means 19, the second guide pulley 20 and the second support element 21 are similarly build and assembled as the first pretensioning means 11, the first guide pulley 12 and the first support element 13. The first guide pulley 12 is arranged between the winding drum 9 and a first opening 23 provided on a first side of the housing 2, and the second guide pulley 20 is arranged between the winding drum 9 and a second opening 24 provided on a second side of the housing 2 opposite the first side. Through the first opening 23 and the second opening 24, the traction means can be guided through the housing 2 and the tensioning arrangement 10. The two ends of the traction means can be connected to the sliding door and the vehicle body respectively and are driven by the drive device 1 to pull the door between the opened and closed position.

The drive device 1 further comprises a braking device 22 for braking or locking the output shaft 6 of the drive unit 5 in order to lock the sliding door, in particular for maintenance purposes preventing unintentional movement of the sliding door during maintenance. The braking device 22 can be activated electronically and is particularly compact. The braking device 22 comprises a brake motor not shown here which is used to activate the braking of the output shaft 6. The precise mode of operation of the braking device is explained in more detail below. In order to control both the drive unit 5 and the brake motor of the braking device 22, an electronic control unit 25 (ECU) is arranged in the housing 2, whereby the electronic control unit 25 is connected to both the drive unit 5 and the brake motor of the braking device 22.

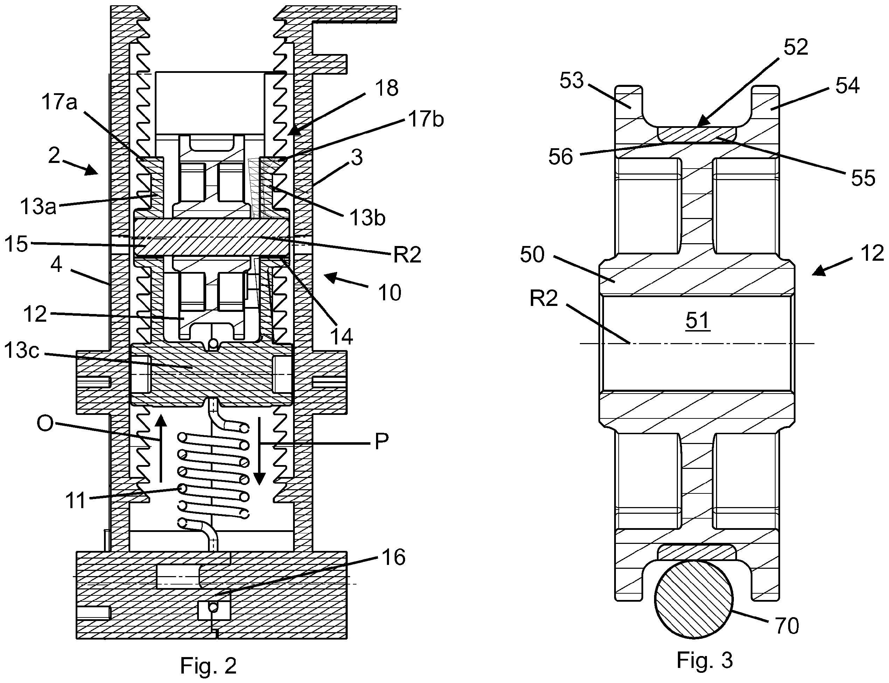

Fig. 2 shows a cross-section through the tensioning arrangement 10 of the drive device 1 of Fig. 1. The housing 2 consists of the first housing part 3 and the second housing part 4, which each form one half of the housing 2. The guide pulley 12 is mounted on the bearing bolt 15 rotatable about a second axis of rotation R2, wherein the second axis of rotation R2 is parallel to the first axis of rotation about which the winding drum 9 shown in Fig. 1 and 4 is rotatable. The bearing bolt 15 is mounted in the elongated holes 14 provided in the support element 13.

The sidewalls 13a, 13b of the support element 13 are sufficiently elastic to allow bending of the sidewalls 13a, 13b when a sufficiently large downward force is exerted by the pretensioning means 11 on the connecting web 13c in the direction P. In particular, the upper parts of the sidewalls 13a, 13b, in which the pawl teeth 17a, 17b are arranged, are bent inwards to such an extent that the support element 13 can be displaced within the discrete distances specified by the toothing 18 provided on the inner wall of the housing parts 3, 4. A bending of the second pawl tooth 17b is shown schematically as an illustration. So that the bending is not hindered by the bearing bolt 15, the two holes 14 through which the bearing bolt 15 is guided are designed as elongated holes. The holes 14 are advantageously elongated in the first direction P to allow the sidewalls 13a, 13b to bend inwards yet providing a radial guide in the perpendicular direction.

The pawl teeth 17a, 17b each have a flat top surface and an inclined bottom surface, wherein the teeth of the toothing 18 have an inclined top surface and a flat bottom surface, whereby the pawl teeth 17a, 17b or the support element 13 can be displaced downwards in the direction P of the pretension provided by the spring 11, but a displacement of the pawl teeth 17a, 17b or the support element 13 upwards in the opposite direction O of the preload is blocked due to the positive fit between the teeth.

Fig. 3 shows a cross section of the first guide pulley 12 shown in Fig. 2. The guide pulley 12 has a base body 50, the base body 50 having a central bearing hole 51 through which the bearing bolt 15 shown in Fig. 2 passes, so that the guide pulley 12 is mounted so that it can rotate about the second axis of rotation R2. The base body 50 is manufactured as an injection-molded part from a plastic. The guide pulley 12 also has a radially circumferential running surface 52, which is bounded by a radially circumferential first sidewall 53 and a radially circumferential second sidewall 54. The sidewalls 53, 54 laterally enclose the traction means 70 guided through the first guide pulley 12, which traction means 70 can be in the form of a cable or rope.

The running surface 52 is formed for the most part by an annular running element 55, which consists of a rubber-elastic material. The running element 55 is inserted in a groove 56 running radially around the base body 50. Advantageously, the additional stresses occurring in the area of the running surface 52 when the cable is shortened are absorbed by deformation of the running body 55.

Fig. 4 shows a sectional view along the drive axis D1 of the drive unit 5 from a bird's eye view. The drive unit 5 comprises a housing 26 and a drive shaft 27 rotatable about the drive axis D1, which is connected to the output shaft 6 via a clamping part 28. This means that the output shaft 6 and the screw thread 7 are driven and rotated about the drive axis D1. By rotating the output shaft 6 and the screw thread 7 the winding drum 9, which is formed integrally with the worm wheel 8, is rotated about the first axis of rotation R1 due to the threaded engagement of the screw thread 7 with the worm wheel 8. The winding drum 9 has a helical circumferential groove 9a on its outer circumference, which has a width corresponding to the width of the traction means in the form of a cable, so that the traction means can be guided on the winding drum 9 without slipping at the corresponding tension.

The output shaft 6 is arranged axially between the drive unit 5 and the braking device 22. The braking device 22 comprises a brake motor 29, which has a brake drive shaft 30, which is rotatable about a brake drive axis B1. The brake drive axis B1 is aligned perpendicular to the drive axis D1 of output shaft 6. The brake drive shaft 30 has an external thread which is in threaded engagement with a square nut 31. The external thread is configured to be non-reversible. The square nut 31 is accommodated in a wedge part 32, wherein the square nut 31 is axially coupled to the wedge part 32 and thus drives the wedge part 32 along the brake drive axis B1 when operating the brake motor 29.

The wedge part 32 is in turn arranged in a receptacle 33 arranged in a guide section 34a of a first brake part 34. The guide section 34a of the first brake part 34 is accommodated in a wedge guide housing 35, wherein the wedge guide housing 35 is fixed to the housing 2 of the drive unit 1. The guide section 34a allows the brake part 34 to be displaced axially along the drive axis D1 but the brake part 34 is non-rotating in relation to the guide housing 35.

The braking device 22 further comprises a spring 36, which is arranged between the wedge guide housing 35 and a brake element 34b arranged an end of the brake part 34 facing a second brake part 37. The spring thus pretensions the first brake part 34 in the direction of the second brake part 37. As the external thread of the brake drive shaft 30 is non reversible the position of the first brake part 34 is only changed when the brake drive shaft 30 of the brake motor 29 is electrically driven.

The second brake component 37 is designed as a brake plate and is non-rotatably connected to the output shaft 6. In the event of contact between the brake element 34b and the first brake part 34, which is non-rotatable relative to the housing 2, and the second brake part 37, the rotation of the output shaft 6 is thus at least braked or even locked.

To deactivate the braking device 22 the brake motor 29 is actuated in order to move the first brake part 34 away from the second brake part 37 against the preload force of the spring 36, whereby the wedge part 32 is displaced in the direction of the brake drive axis B1. Since the wedge part 32 has an inclined side surface 32a which is in contact with an inclined side surface 33a of the receptacle 33 in the first brake part 34, a displacement of the first brake part 34 in the direction of the first drive axis D1 is driven with enough force to overcome the force by the spring 36. In the situation shown here in Fig. 4 the first brake part 34 and the second brake part 37 are not in contact and thus the braking device 22 is deactivated. To ensure that the wedge part 32 is more easily displaced a plate 38 having a very low coefficient of friction is placed between the wedge part 32 and the inner wall of the receptacle 33 of the first brake part 34.

To activate the braking device 22 the brake motor 29 is operated to rotate the brake drive shaft 30 so as to displace the wedge part 32 towards the brake motor 29. As the spring 36 is biasing the first brake part 34 towards the second brake part 37 the first brake part 34 will move along the drive axis D1 towards the second brake part 37 and eventually a contact between the first brake part 34 and the second brake part 37 will occur to provide a braking force.

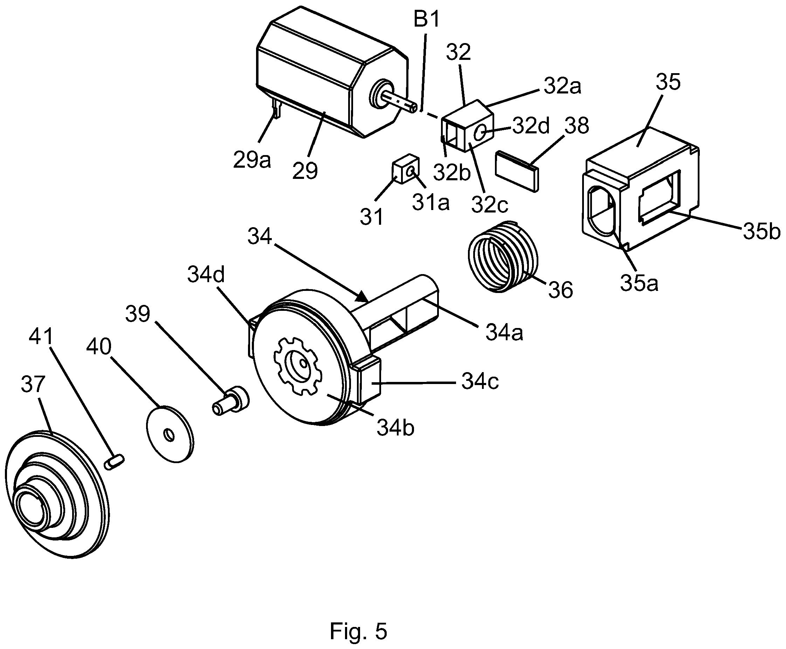

Fig. 5 shows an exploded view of the braking device 22. The brake motor 29 has an electrical connection 29a, which is connected to the central power supply and the electronic control unit 25. The square nut 30 has a central threaded hole 30a, which is in threaded engagement with the external thread 30a provided on the brake drive shaft 30. The square nut 31 can be accommodated in the receptacle in the wedge part 32, with the square nut 31 driving the wedge part 32 axially along the brake drive axis B1 towards the brake motor 29 when the brake drive shaft 30 rotates in a first direction of rotation and when the brake drive shaft 30 rotates in a second direction of rotation in the axial direction along the brake drive axis B1 away from the brake motor 29.

The wedge part 32 has an inclined side surface 32a and a flat side surface 32b, wherein the flat side surface 32b is in contact with the plate 38 to improve the sliding capability of the wedge part 32 relative to the first brake part 34. The wedge part 32 furthermore has a front side 32c, wherein the front side 32c has a bore 32d, wherein the bore 32d has a diameter which is smaller than the diameter of the square nut 31. Advantageously the square nut 31 is held axially withing the wedge part 32 and transfers the axial movement along the brake drive axis B1 to the wedge part 32.

The wedge guide housing 35 has an opening 35a on its front end into which the guide section 34a of the first brake part 34 is insertable. The opening 35a has two opposite flat sides and an arc-shaped top and bottom side, wherein the guide section 34a also has similarly shaped flat sides and arc-shaped top and bottom sides. Advantageously, the first brake part 34 is non-rotatable but axially displaceable relative to the wedge guide housing 35.

The brake element 34b is designed as a plate, which has two retaining projections 34c, 34d on its circumference, which also serve to secure the first braking element 34 against rotation relative to the housing 2. The wedge guide housing 35 has two opposing recesses 35b on its sides, through which the brake drive shaft 30 and the wedge part 32 pass. Advantageously, the wedge part 32 can be displaced over a sufficiently large area along the brake drive axis B1 to achieve sufficient axial displacement of the first brake part 34 via the inclined side surface 32a.

The second brake part 37 is fixed to the output shaft 6 via a screw 39, wherein a washer 40 is arranged between the head of the screw 39 and the second brake part 37.. Furthermore, a clutch module 41 is arranged between the output shaft 6 and the second brake part 37, wherein the clutch module 41 is compressed by the screw 39.

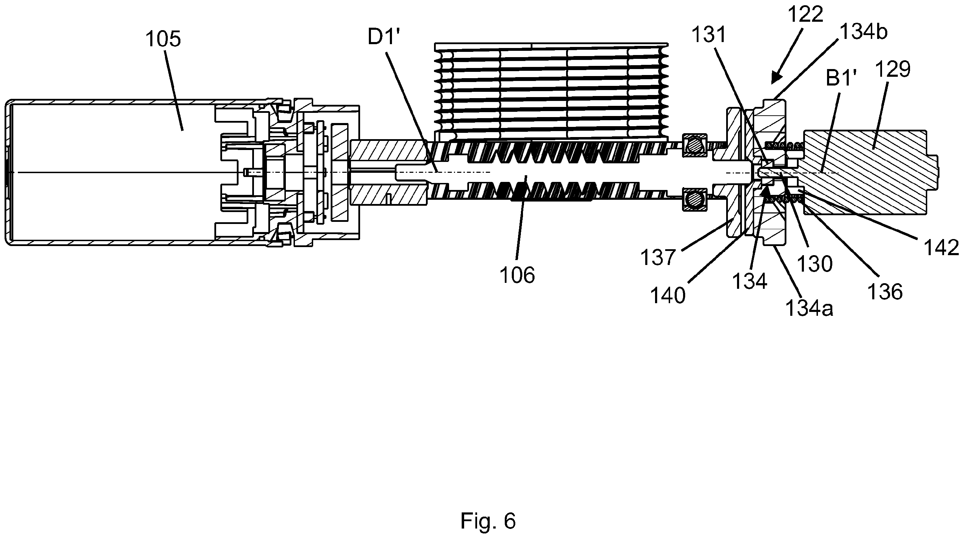

Fig. 6 shows a second embodiment of braking device 122 alternative to the braking device 22 shown in Fig. 4 and 5. The braking device 122 comprises a brake motor 129, which has a brake drive shaft 130, which is rotatable about a brake drive axis B1'. The brake drive axis B1' is parallel to the drive axis D1' of a drive unit 105, wherein an output shaft 106 is arranged axially between the drive unit 105 and the braking device 122.

The brake drive shaft 130 has an external thread which is in threaded engagement with a square nut 131. The external thread is configured to be non-reversible. The square nut 131 is accommodated in a receptacle 133 of a first brake part 134. The first brake part 134 is designed as a plate, which has two retaining projections 134a, 134b on its circumference, which serve to secure the first brake part 34 against rotation.

The braking device 122 further comprises a spring 136, which is arranged between the brake motor 129 and the first brake part 134. The spring 136 thus pretensions the first brake part 134 in the direction towards a second brake part 137, wherein the second brake part 137 is connected to the output shaft 106. As the external thread of the brake drive shaft 130 is non reversible, the position of the first brake part 134 is only changed when the brake drive shaft 130 of the brake motor 129 is electrically driven. A washer 140 is arranged between the first brake part 134 and the second brake 137 which holds the square nut 131 in place within the receptacle 133 of the first brake part 134.

Furthermore, the brake device 122 comprises a stopping element 142 arranged between the first brake part 134 and the brake motor 129. The stopping element 142 ensures that the first brake part 134 can be drawn backwards by rotation of the brake drive shaft 130 until the first brake part 134 abuts against the stopping element 142. The stopping element 142 is designed as a ring attached to the brake motor 129. In contrast to the design example shown in Fig. 4, all components are displaced coaxially around the drive axis D1'. Accordingly, an inclined side surface is required on the square nut 131.

## Claims

1. Drive device (1) for a sliding door, comprising
a housing (2),
a drive unit (5) with an output shaft (6) rotatable about a drive axis (D1),
a winding drum (9) for a traction means (70), wherein the winding drum (9) is coupled to the output shaft (6) of the drive unit (5), wherein the winding drum (9) is rotatable about a first axis of rotation (R1), and
a tensioning arrangement (10) for tensioning the traction means (70) against the winding drum (9), wherein the tensioning arrangement (10) comprises at least a first pretensioning means (11) and at least a first guide pulley (12) rotatable about a second axis of rotation (R2), **characterized in that**
the guide pulley (12) is displaceable in a first direction (P) and is locked in a second direction (O) opposite to the first direction (P).

2. The drive device (1) according to claim 1, wherein the tensioning arrangement (10) comprises a first support element (13) in which the first guide pulley (12) is rotatably supported, wherein the support element (13) can be displaced in the first direction (P) and is locked in the second direction (O).

3. The drive device (1) according to claim 2, wherein the first support element (13) comprises a first side wall (13a) and a second side wall (13b) between which the first guide pulley (12) is arranged, wherein the first side wall (13a) is connected to the second side wall (13b) via a connecting web (13c).

4. The drive device (1) according to claim 2 or 3, wherein the first support element (13) comprises a first coupling element (17a) coupled to a counter-coupling section (18), wherein the counter-coupling section (18) is fixed relative to the housing (2).

5. The drive device (1) according to claim 4, wherein the first coupling element (17a) is arranged at a flexible end of the support element (13), wherein the first coupling element (17a) is movable in a direction transverse to the first direction (P).

6. The drive device (1) according to claim 4 or 5, wherein the first coupling element (17a) is designed as a pawl tooth and the counter-coupling section (18) is designed as a toothing.

7. The drive device (1) according to claim 6, wherein the pawl tooth has a flat top surface and a slanted bottom surface and the toothing has teeth with a flat bottom surface and a slanted top surface.

8. A guide pulley (12) for a drive device (1) of a sliding door, comprising a base body (50) made of a first material with a bearing hole (51) which passes through the base body (50) along an axis of rotation (R2) and a radially circumferential running surface (52), **characterized in that** the running surface (52) consists at least partially of a second material.

9. A braking device for a drive device, comprising
a first brake part (34; 134),
a second brake part (37; 137) coupled to an output shaft (6; 106) of a drive unit (5; 105) of the drive device (1), wherein the second brake part (37; 137) is rotatable together with the output shaft (6; 106) about a first drive axis (D1; D1'), and
a spring (36; 136) pretensioning the first brake part (34; 134) towards the second brake part (37; 137),
**characterized in that**
a counteracting element (32; 131) designed to displace the first brake part (34; 134) against the pretensioning of the spring (36; 136) away from the second brake part (37; 137) is arranged at the first brake part (34; 134).

10. The braking device for a drive device according to claim 9, wherein the first brake part (34; 134) has a receptacle (33; 133) in which the counteracting element (32; 131) is arranged at least in parts.

11. The braking device according to claim 10, wherein the counteracting element (32) is designed as a wedge part, wherein the wedge part has an inclined first side surface (32a) which is in engagement with an inclined first side surface of the receptacle (33).

12. The braking device according to claim 11, wherein a second side surface of the wedge part (32) opposite the inclined first side surface is flat and is at least indirectly frictionally coupled to a second flat side surface opposite the inclined first side surface of the receptacle (33).

13. The braking device according to claim 12, wherein a plate (38) is arranged between the second flat side surface of the wedge part (32) and the second flat side surface of the receptacle (33), wherein the surface of the plate (38) facing the second flat side surface of the wedge part (32) has a low coefficient of friction.

14. The braking device according to one of claims 9 to 13, wherein the counteracting element (32) is in threaded engagement with a brake drive shaft (30) of a brake motor (29) rotatable about a brake drive axis (B1) and is displaceable along the brake axis (B1) by rotation of the brake drive shaft (30).

15. The braking device according to claim 14, wherein the brake drive axis (B1) is transverse, in particular perpendicular to the drive axle (D1).
